# EUROPEAN PATENT SPECIFICATION

(11) **EP 4 610 979 B1**
(45) Date of publication and mention of the grant of the patent: **18.11.2026**
(21) Application number: 24160398.4
(22) Date of filing: 28.02.2024
(51) Int. Cl.: G10L 15/26, G06F 40/58, B64D 11/00, B64D 27/20

(54) **SYSTEM AND METHOD FOR SPEECH-TO-TEXT CONVERSION OF PASSENGER ANNOUNCEMENTS ON BOARD OF AN AIRCRAFT**
SYSTEM UND VERFAHREN ZUR SPRACHE-ZU-TEXT-UMWANDLUNG VON PASSAGIERANSAGEN AN BORD EINES FLUGZEUGS
SYSTÈME ET PROCÉDÉ DE CONVERSION PAROLE-TEXTE D'ANNONCES DE PASSAGERS À BORD D'UN AÉRONEF

(43) Date of publication of application: 03.09.2025
(73) Proprietor: Airbus Operations GmbH, 21129 Hamburg (DE)
(72) Inventor: Berkhahn, Sven-Olaf, Hamburg (DE); Schulz, Stefan, Hamburg (DE)
(74) Representative: Airbus Germany

(56) References cited:
- US-A1- 2016 372 114
- US-A1- 2023 252 246

## Description

The present invention pertains to a system and a method for speech-to-text conversion of passenger announcements on board of an aircraft.

Various announcements are usually made on board of aircraft by aircraft personnel, e.g., flight attendants and/or pilots. For example, such announcements may be made before or after take-off and landing. In general, two different types of announcements exist on board of aircraft, the first being pre-recorded announcements and the second being live announcements. Pre-recorded announcements are sometimes called Pre-Recorded Announcements and Music (PRAM) and live announcements are often called Passenger Address (PA) announcements. Both of these announcements are usually announced or advertised to passengers by a so-called chime. A chime is a certain tone or jingle indicating that an announcement is going to be made. Further, during an announcement, a message may be displayed on passenger displays of an In-Flight Entertainment (IFE) system. For example, such a message may read "announcement in progress" or the like.

However, for deaf or hearing-impaired passengers it is difficult if not impossible to follow such announcements. Further, passengers might be distracted and/or might not listen carefully to the announcement made. On top of that, language barriers may be an issue.

Prior art document EP 3 107 090 A1 describes a method where a text message is generated based on a speech signal related to a passenger announcement, which is then be distributed to passenger devices. To this end, speech-to-text (STT) techniques are employed, that is, computer-implemented assistance for translating spoken language into text.

Document US 2023/252246 A1 discloses a cabin crew assist on an aircraft.

Document US 2016/372114 A1 discloses an announcement signalling on board an aircraft.

However, in order to make use of such computer implemented solutions it is usually necessary to have a more or less permanent internet connection to an online server and/or cloud computing infrastructure providing the translation software modules that facilitate the conversion.

Against this background, there is a need for an improved technique for signaling announcements to passengers on board of an aircraft.

This object is achieved by a system having the features of claim 1, an aircraft having the features of claim 4 and a method having the features of claim 5.

According to the invention, a system for speech-to-text conversion of passenger announcements on board of an aircraft comprises a cabin management control configured to provide a speech signal related to an announcement to passengers on board of the aircraft; a cabin application server comprising a processing unit configured to convert the speech signal into a text message containing text corresponding to spoken words of the speech signal, wherein the processing unit is configured to convert the speech signal locally without accessing online computing resources; and a network interface configured to provide the text message to at least one passenger device on board of the aircraft.

Further according to the invention, an aircraft comprises a system according to the invention.

Further according to the invention, a method for speech-to-text conversion of passenger announcements on board of an aircraft comprises providing, by a cabin management control, a speech signal related to an announcement to passengers on board of the aircraft; converting, by a processing unit of a cabin application server, the speech signal into a text message containing text corresponding to spoken words of the speech signal, wherein the processing unit converts the speech signal locally without accessing online computing resources; and providing, by a network interface, the text message to at least one passenger device on board of the aircraft, wherein the processing unit translates the speech signal from a source language to a target language as part of the conversion, wherein the network interface provides a correspondingly translated text message to the at least one passenger device on board of the aircraft, wherein the processing unit generates a correspondingly translated speech signal containing spoken words corresponding to text of the translated text message, wherein the network interface provides the translated speech signal to the at least one passenger device on board of the aircraft, wherein the cabin management control performs recording a live audio announcement as speech signal and storing it in a data storage, and storing the translated speech signal in the data storage, wherein the data storage is accessible by the passengers and configured to let the passengers replay the audio announcements via the passenger device.

Further according to the invention, a computer program product is provided. The computer program product comprises program code for carrying out one or more of the steps of any of the method aspects described herein, when the computer program product is run or executed on a computer system or on one or more computing devices. The computer program product may be stored on a computer readable recording medium, such as a permanent or rewritable memory, or may be downloadable.

Thus, one idea of the present invention is to provide the cabin infrastructure of an aircraft with the means for facilitating offline speech-to-text conversion of passenger announcements. To this end, the invention provides an application-specific processing unit as part of the cabin equipment on board of the aircraft that is able to run the required speech-to-text conversion software locally and offline, that is, without accessing online computing resources like cloud processing and the like.

Today, announcements of the cabin crew are mostly still done verbally and live. Hence, there is usually no possibility for passengers to re-play an announcement in case they have not understood all details or to (re-)read the announcement in text form at a later point in time (e.g. in case of hearing impaired persons). On the other hand, state of the art solutions based on speech-to-text conversion and/or speech recognition that could be used to improve this situation normally rely on a stable internet connection and may thus not be suitable for the use on board of an aircraft where a permanent internet connection may not be guaranteed at any time.

To overcome these problems, the present invention provides dedicated computing equipment on board of the aircraft specifically designed for the above purpose, which can be run without any internet connection whatsoever. Hence, verbal passenger announcements can be translated in-situ and potentially almost live even in an emergency situation where an internet connection may not be available at least for some period of time. The main advantage is that any passenger (not only hearing impaired passengers) have the option to re-play and/or to (re-)read spoken live announcements of cabin or cockpit crew on their own devices (mobile phones, tablets, laptops etc.) as long as these devices are linked to the respective on-board network and/or storage system providing the respective textual form of the announcement.

Advantageous embodiments and improvements of the present invention are found in the subordinate claims.

According to an embodiment of the invention, the processing unit may comprise an Al accelerator, in particular a tensor processing unit, configured to utilize at least one of Al and machine learning for converting the speech signal.

An Al accelerator, deep learning processor, and/or neural processing unit is a class of specialized hardware accelerator or computer system designed to accelerate artificial intelligence and machine learning applications, including artificial neural networks and machine vision. A tensor processing unit is a particular example for such application-specific processing equipment that can be used for the present purpose. In that sense, any custom-made and/or generally available Al trained speech-to-text software and/or hardware solution may be employed for the present purpose as long as it can be run locally without a permanent internet connection. In other words, the invention enhances the normal computing infrastructure of a passenger cabin with a tensor processing unit or similar in order to remain independent of internet access for the conversion of passenger announcements.

According to the invention, the processing unit is configured to translate the speech signal from a source language to a target language as part of the conversion. The network interface is configured to provide a correspondingly translated text message to the at least one passenger device on board of the aircraft.

Hence, the announcements are not only transcribed/converted but also translated from a source language to one or several other languages via the Al modules of the processing unit. In that vein, passengers may receive the announcement in basically any preferred language.

According to the invention, the processing unit is configured to generate a correspondingly translated speech signal containing spoken words corresponding to text of the translated text message. The network interface is configured to provide the translated speech signal to the at least one passenger device on board of the aircraft.

Hence, the translated version is not only provided in text form but also as spoken words generated by the processing unit.

According to the invention, the system further comprises a data storage. The cabin management control is configured to record a live audio announcement as speech signal and store it in the data storage and to store the translated speech signal in the data storage. The data storage is accessible by the passengers and configured to let the passengers replay the audio announcements via the passenger device.

The cabin management control may further store the text message and/or the translated text message.

In that way, announcements could also be accessed and/or reused at a later point in time from the data storage.

According to an embodiment of the invention, the cabin management control may be configured to provide a notification signal to the at least one passenger device via the network interface notifying the at least one passenger device that an announcement is made.

For example, for hearing impaired persons there may be a vibration or similar signal on a mobile phone or other device that is triggered by a respective announcement signal from the cabin management control. Alternatively, or additionally, such a notification signal may also be triggered automatically by the respective passenger device, e.g. by a detection of a spoken announcement via one or several microphones integrated in the passenger device and/or the aircraft cabin. A corresponding trigger signal may also be sent out by the cabin application server.

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. In the figures, like reference numerals denote like or functionally like components, unless indicated otherwise.
Fig. 1 schematically depicts a system for speech-to-text conversion of passenger announcements on board of an aircraft according to an embodiment of the invention.
Fig. 2 depicts a schematic flow diagram for a corresponding method according to an embodiment of the invention.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

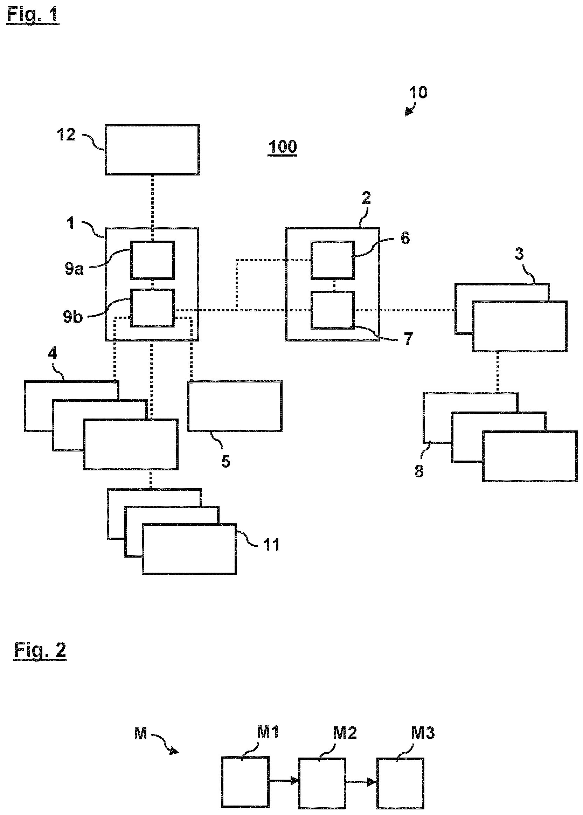

Figure 1 schematically depicts a system 10 for speech-to-text conversion of passenger announcements on board of an aircraft 100 according to an embodiment of the invention. Fig. 2 depicts a schematic flow diagram for a corresponding method M according to an embodiment of the invention.

The system 10 and method M are provided to convert announcements of the aircraft crew into text messages that can be read by the passengers on their own devices immediately after (or even still during the announcement) or at a later point in time. The thus generated text messages serve as an alternative in case a passenger missed an announcement for whatever reason or in case a passenger is not able to hear and/or understand the announcement.

The basic idea is to make use of Al/machine learning technology for offline speech-to-text conversion for passenger announcements. An already existing cabin management system with passenger address (PA) function for audio announcements by cabin or cockpit crew or announcements coming from an integrated pre-recorded announcement module (iPRAM) function may be used as it is. This basic system can then be enhanced by the present teachings with a dedicated Al accelerator processing unit in order to be able to convert speech to text offline locally and without having to rely on online computing resources, as will be explained in detail now.

The system 10 comprises a cabin management control 1 adapted for controlling a cabin management system as it is known in the art. Such a system generally provides an interface for the cabin crew to monitor and control all aircraft functions related to the cabin. The cabin management control 1 amongst others offers a recorded passenger announcement function 9a and a live passenger announcement function 9b.

The recorded passenger announcement function 9a is used to make pre-recorded announcements, i.e. Pre-Recorded Announcements and Music (PRAM). To this end, the cabin management control 1 can access an audio source 12, e.g. a data storage, providing pre-recorded announcements and other sound files, which may be retrieved from the audio source 12 by the cabin management control 1 and then forwarded to at least one loudspeaker 11 installed within the cabin on board of the aircraft 100.

The live passenger announcement function 9b on the other hand is used to manage live announcements, i.e. Passenger Address (PA) announcements, which are made by the cabin or cockpit crew via cabin crew devices 4 (e.g. a crew handset) and cockpit crew devices 5 (e.g. cockpit audio management unit or also a crew handset), respectively, and broadcasted via the loudspeakers 11 of the cabin.

The cabin management control 1 provides the above announcements as speech signals. The system 10 further comprises a cabin application server 2, which receives these speech signals from the cabin management control 1, e.g. via an analog and/or digital audio interface (potentially together with audio control signals, not shown in Fig. 1).

The cabin application server 2 comprises a processing unit 6 configured to convert the speech signal into a text message containing text corresponding to spoken words of the speech signal. More specifically, the processing unit 6 is configured to convert the speech signal locally without accessing online computing resources. The processing unit 6 may be in particular a tensor processing unit or other Al accelerator that can be operated offline without connection to cloud processing or other online services and which can execute suitable Al and/or machine learning modules for converting spoken language to written text.

The terminology "to convert" may also be understood herein as "to transcribe". For example, speech recognition may be performed on a speech signal that is transmitted as an audio announcement to passengers via loudspeakers 11 installed in the cabin of the aircraft 100. A text message thus generated may form a simultaneous textual representation of the audio announcement and may be provided to passengers in addition to the audio announcement itself.

To this end, the system 10 further comprises a network interface 3 configured to provide the text message to at least one passenger device 8 on board of the aircraft, e.g. a mobile phone, a laptop, a tablet or other portable device used by passengers.

The processing unit 6 not only transcribes speech to written text but is also configured to translate the speech signal from a source language to a target language as part of the conversion, which is then provided to the at least one passenger device 8 by the network interface 3. The processing unit 6 may hence be used to run Al-based pre-trained multilingual speech-to-text software modules to convert offline locally by means of the cabin application server without any online cloud processing.

Furthermore, the processing unit 6 is configured to generate a correspondingly translated speech signal containing spoken words corresponding to text of the translated text message, which are then also provided to the at least one passenger device 8 by the network interface 3.

The system 10 further comprises a data storage 7 that can be used for storing a recorded version of each live audio announcement as well as for storing the corresponding text messages, translated text messages and/or translated speech signals. In the exemplary embodiment of Fig. 1, the data storage is integrated in the cabin application server 2.

The passengers may thus read a text version of a live announcement in any preferred language and may in addition even listen to translated versions of it. Passengers may connect their mobile phones or tablets or other devices to the network interface, which may be, for example, a WiFi access point that is installed in the aircraft cabin. Via the WiFi connection the passengers have access to the data files stored on the data storage 6 of the cabin application server 2. Via an app or a browser or other software tool on the passenger devices 8 the passengers can re-play the audio announcements and listen to them via headphones plugged into passenger devices 8. Or, alternatively or additionally, the passengers can read the announcements stored on the cabin application server 2 on their devices 8.

The cabin management control 1 may be further configured to provide a notification signal to the at least one passenger device 8 via the network interface 3 notifying the at least one passenger device 8 that an announcement is made. For example, for hearing impaired persons there may be a vibration signal on a mobile phone, which may be triggered by the speech signal from the cabin management control (indication of an active announcement). In another example, a noise, sound and/or speech detection function may be run on the cabin application server 2 so that whenever an announcement is made, an automatic indication can be forwarded to some or all passengers notifying them that there is a new announcement available.

The passengers may be able to choose in advance in which language they would like to listen to or would like to read the announcements. Hence, it can be made sure that each passenger receives the announcements in his/her mother language or any preferred language (independent of the live spoken announcements of the cabin or cockpit crew).

The main advantage of the present system is that any passenger (not only hearing impaired passengers) have the option to re-play or to read the verbal spoken live announcements of cabin or cockpit crew on their own devices (mobile phones, tablets, laptops etc.) linked to the on-board WiFi system. This is further enhanced by a multi-language translation option for written and spoken texts.

The corresponding method M of Fig. 2 thus comprises under M1 providing with the cabin management control 1 a speech signal related to an announcement to passengers on board of the aircraft 100, under M2 converting with the processing unit 6 of the cabin application server 2 the speech signal into a text message containing text corresponding to spoken words of the speech signal offline locally without accessing online computing resources, and under M3 providing with the network interface 3 the text message to at least one passenger device 8 on board of the aircraft 100.

In the foregoing detailed description, various features are grouped together in one or more examples or examples with the purpose of streamlining the disclosure. It is to be understood that the above description is intended to be illustrative, and not restrictive. Many other examples will be apparent to one skilled in the art upon reviewing the above specification. The embodiments were chosen and described in order to best explain the principles of the invention and its practical applications, to thereby enable others skilled in the art to best utilize the invention and various embodiments with various modifications as are suited to the particular use contemplated.

### List of reference signs

- 1: cabin management control
- 2: cabin application server
- 3: network interface
- 4: cabin crew device
- 5: cockpit crew device
- 6: processing unit
- 7: data storage
- 8: passenger device
- 9a: recorded passenger announcement function
- 9b: live passenger announcement function
- 10: system
- 11: loudspeaker
- 12: audio source
- 100: aircraft
- M: method
- M1-M3: method steps

## Claims

1. System (10) for speech-to-text conversion of passenger announcements on board of an aircraft (100), the system (10) comprising:
a cabin management control (1) configured to provide a speech signal related to an announcement to passengers on board of the aircraft (100);
a cabin application server (2) comprising a processing unit (6) configured to convert the speech signal into a text message containing text corresponding to spoken words of the speech signal, wherein the processing unit (6) is configured to convert the speech signal locally without accessing online computing resources;
a network interface (3) configured to provide the text message to at least one passenger device (8) on board of the aircraft (100); and
a data storage (7), wherein the cabin management control (1) is configured to:
record a live audio announcement as speech signal and store it in the data storage (7), and
store at least the translated speech signal in the data storage (7);
wherein the data storage (7) is accessible by the passengers and configured to let the passengers replay the audio announcements via the passenger device (8);
wherein the processing unit (6) is configured to translate the speech signal from a source language to a target language as part of the conversion,
wherein the network interface (3) is configured to provide a correspondingly translated text message to the at least one passenger device (8) on board of the aircraft (100),
wherein the processing unit (6) is configured to generate a correspondingly translated speech signal containing spoken words corresponding to text of the translated text message, wherein the network interface (3) is configured to provide the translated speech signal to the at least one passenger device (8) on board of the aircraft (100).

2. System (10) according to claim 1, wherein the processing unit (6) comprises an Al accelerator, in particular a tensor processing unit, configured to utilize at least one of Al and machine learning for converting the speech signal.

3. System (10) according to one of the claims 1 to 2, wherein the cabin management control (1) is configured to provide a notification signal to the at least one passenger device (8) via the network interface (3) notifying the at least one passenger device (8) that an announcement is made.

4. Aircraft (100) comprising a system (10) according to one of the claims 1 to 3.

5. Method (M) for speech-to-text conversion of passenger announcements on board of an aircraft (100), the method (M) comprising:
providing (M1), by a cabin management control (1), a speech signal related to an announcement to passengers on board of the aircraft (100);
converting (M2), by a processing unit (6) of a cabin application server (2),
the speech signal into a text message containing text corresponding to spoken words of the speech signal, wherein the processing unit (6) converts the speech signal locally without accessing online computing resources; and
providing (M3), by a network interface (3), the text message to at least one passenger device (8) on board of the aircraft (100),
wherein the processing unit (6) translates the speech signal from a source language to a target language as part of the conversion, wherein the network interface (3) provides a correspondingly translated text message to the at least one passenger device (8) on board of the aircraft (100),
wherein the processing unit (6) generates a correspondingly translated speech signal containing spoken words corresponding to text of the translated text message, wherein the network interface (3) provides the translated speech signal to the at least one passenger device (8) on board of the aircraft (100);
wherein the cabin management control (1) performs:
recording a live audio announcement as speech signal and storing it in a data storage (7); and
storing the translated speech signal in the data storage (7);
wherein the data storage (7) is accessible by the passengers and configured to let the passengers replay the audio announcements via the passenger device (8).

6. Method (M) according to claim 5, wherein the processing unit (6) comprises an Al accelerator, in particular a tensor processing unit, utilizing at least one of Al and machine learning for converting the speech signal.

7. Method (M) according to one of the claims 5 or 6, wherein the cabin management control (1) provides a notification signal to the at least one passenger device (8) via the network interface (3) notifying the at least one passenger device (8) that an announcement is made.

8. Computer program product comprising program code for carrying out the method (M) of any one of claims 5 to 7 when the computer program product is executed on a computing device.

9. Computer readable recording medium storing a computer program product according to claim 8.

## Patentansprüche

1. System (10) zur Sprache-zu-Text-Umwandlung von Passagierdurchsagen an Bord eines Luftfahrzeugs (100), wobei das System (10) Folgendes umfasst:
• eine Kabinenmanagementsteuerung (1), die dafür konfiguriert ist, ein Sprachsignal bereitzustellen, das sich auf eine Durchsage an Passagiere an Bord des Luftfahrzeugs (100) bezieht;
• einen Kabinenanwendungsserver (2), der eine Verarbeitungseinheit (6) umfasst, die dafür konfiguriert ist, das Sprachsignal in eine Textnachricht umzuwandeln, die Text enthält, der gesprochenen Wörtern des Sprachsignals entspricht, wobei die Verarbeitungseinheit (6) dafür konfiguriert ist, das Sprachsignal lokal ohne Zugriff auf Online-Rechenressourcen umzuwandeln;
• eine Netzwerkschnittstelle (3), die dafür konfiguriert ist, die Textnachricht an mindestens ein Passagiergerät (8) an Bord des Luftfahrzeugs (100) bereitzustellen; und
• einen Datenspeicher (7), wobei die Kabinenmanagementsteuerung (1) dafür konfiguriert ist:
∘ eine Live-Audiodurchsage als Sprachsignal aufzuzeichnen und im Datenspeicher (7) zu speichern, und
∘ zumindest das übersetzte Sprachsignal im Datenspeicher (7) zu speichern;
wobei für die Passagiere auf den Datenspeicher (7) zugegriffen werden kann und dieser dafür konfiguriert ist, die Passagiere die Audiodurchsagen über das Passagiergerät (8) wiedergeben zu lassen; wobei die Verarbeitungseinheit (6) dafür konfiguriert ist, das Sprachsignal als Teil der Umwandlung von einer Ausgangssprache in eine Zielsprache zu übersetzen, wobei die Netzwerkschnittstelle (3) dafür konfiguriert ist, eine entsprechend übersetzte Textnachricht an das mindestens eine Passagiergerät (8) an Bord des Luftfahrzeugs (100) bereitzustellen, wobei die Verarbeitungseinheit (6) dafür konfiguriert ist, ein entsprechend übersetztes Sprachsignal zu erzeugen, das gesprochene Wörter enthält, die dem Text der übersetzten Textnachricht entsprechen, wobei die Netzwerkschnittstelle (3) dafür konfiguriert ist, das übersetzte Sprachsignal an das mindestens eine Passagiergerät (8) an Bord des Luftfahrzeugs (100) bereitzustellen.

2. System (10) nach Anspruch 1, wobei die Verarbeitungseinheit (6) einen KI-Beschleuniger, insbesondere eine Tensor Processing Unit, umfasst, der dafür konfiguriert ist, KI und/oder maschinelles Lernen zum Umwandeln des Sprachsignals zu nutzen.

3. System (10) nach einem der Ansprüche 1 bis 2, wobei die Kabinenmanagementsteuerung (1) dafür konfiguriert ist, dem mindestens einen Passagiergerät (8) über die Netzwerkschnittstelle (3) ein Benachrichtigungssignal bereitzustellen, das das mindestens eine Passagiergerät (8) darüber benachrichtigt, dass eine Durchsage erfolgt.

4. Luftfahrzeug (100), umfassend ein System (10) nach einem der Ansprüche 1 bis 3.

5. Verfahren (M) zur Sprache-zu-Text-Umwandlung von Passagierdurchsagen an Bord eines Luftfahrzeugs (100), wobei das Verfahren (M) Folgendes umfasst:
• Bereitstellen (M1), durch eine Kabinenmanagementsteuerung (1), eines Sprachsignals, das sich auf eine Durchsage an Passagiere an Bord des Luftfahrzeugs (100) bezieht;
• Umwandeln (M2), durch eine Verarbeitungseinheit (6) eines Kabinenanwendungsservers (2), des Sprachsignals in eine Textnachricht, die Text enthält, der gesprochenen Wörtern des Sprachsignals entspricht, wobei die Verarbeitungseinheit (6) das Sprachsignal lokal ohne Zugriff auf Online-Rechenressourcen umwandelt; und
• Bereitstellen (M3), durch eine Netzwerkschnittstelle (3), der Textnachricht an mindestens ein Passagiergerät (8) an Bord des Luftfahrzeugs (100),
wobei die Verarbeitungseinheit (6) das Sprachsignal als Teil der Umwandlung von einer Ausgangssprache in eine Zielsprache übersetzt, wobei die Netzwerkschnittstelle (3) eine entsprechend übersetzte Textnachricht an das mindestens eine Passagiergerät (8) an Bord des Luftfahrzeugs (100) bereitstellt, wobei die Verarbeitungseinheit (6) ein entsprechend übersetztes Sprachsignal erzeugt, das gesprochene Wörter enthält, die dem Text der übersetzten Textnachricht entsprechen, wobei die Netzwerkschnittstelle (3) das übersetzte Sprachsignal an das mindestens eine Passagiergerät (8) an Bord des Luftfahrzeugs (100) bereitstellt; wobei die Kabinenmanagementsteuerung (1) Folgendes ausführt:
• Aufzeichnen einer Live-Audiodurchsage als Sprachsignal und Speichern desselben in einem Datenspeicher (7); und
• Speichern des übersetzten Sprachsignals im Datenspeicher (7);
wobei für die Passagiere auf den Datenspeicher (7) zugegriffen werden kann und dieser dafür konfiguriert ist, die Passagiere die Audiodurchsagen über das Passagiergerät (8) wiedergeben zu lassen.

6. Verfahren (M) nach Anspruch 5, wobei die Verarbeitungseinheit (6) einen KI-Beschleuniger, insbesondere eine Tensor Processing Unit, umfasst, der KI und/oder maschinelles Lernen zum Umwandeln des Sprachsignals nutzt.

7. Verfahren (M) nach einem der Ansprüche 5 oder 6, wobei die Kabinenmanagementsteuerung (1) dem mindestens einen Passagiergerät (8) über die Netzwerkschnittstelle (3) ein Benachrichtigungssignal bereitstellt, das das mindestens eine Passagiergerät (8) darüber benachrichtigt, dass eine Durchsage erfolgt.

8. Computerprogrammprodukt, das Programmcode zur Durchführung des Verfahrens (M) nach einem der Ansprüche 5 bis 7 umfasst, wenn das Computerprogrammprodukt auf einer Rechenvorrichtung ausgeführt wird.

9. Computerlesbares Aufzeichnungsmedium, das ein Computerprogrammprodukt nach Anspruch 8 speichert.

## Revendications

1. Système (10) de conversion parole-texte d'annonces aux passagers à bord d'un aéronef (100), le système (10) comprenant :
• une commande de gestion de cabine (1) configurée pour fournir un signal vocal relatif à une annonce aux passagers à bord de l'aéronef (100) ;
• un serveur d'applications de cabine (2) comprenant une unité de traitement (6) configurée pour convertir le signal vocal en un message texte contenant du texte correspondant à des mots parlés du signal vocal, dans lequel l'unité de traitement (6) est configurée pour convertir le signal vocal localement sans accéder à des ressources informatiques en ligne ;
• une interface réseau (3) configurée pour fournir le message texte à au moins un dispositif de passager (8) à bord de l'aéronef (100) ; et
• une mémoire de données (7), dans lequel la commande de gestion de cabine (1) est configurée pour :
∘ enregistrer une annonce audio en direct sous forme de signal vocal et la stocker dans la mémoire de données (7), et
∘ stocker au moins le signal vocal traduit dans la mémoire de données (7) ;
dans lequel la mémoire de données (7) est accessible par les passagers et configurée pour permettre aux passagers de réécouter les annonces audio via le dispositif de passager (8) ; dans lequel l'unité de traitement (6) est configurée pour traduire le signal vocal d'une langue source vers une langue cible dans le cadre de la conversion, dans lequel l'interface réseau (3) est configurée pour fournir un message texte traduit de manière correspondante à l'au moins un dispositif de passager (8) à bord de l'aéronef (100), dans lequel l'unité de traitement (6) est configurée pour générer un signal vocal traduit de manière correspondante contenant des mots parlés correspondant au texte du message texte traduit, dans lequel l'interface réseau (3) est configurée pour fournir le signal vocal traduit à l'au moins un dispositif de passager (8) à bord de l'aéronef (100).

2. Système (10) selon la revendication 1, dans lequel l'unité de traitement (6) comprend un accélérateur d'IA, en particulier une unité de traitement de tenseurs, configuré pour utiliser l'IA et/ou l'apprentissage automatique pour convertir le signal vocal.

3. Système (10) selon l'une des revendications 1 à 2, dans lequel la commande de gestion de cabine (1) est configurée pour fournir un signal de notification à l'au moins un dispositif de passager (8) via l'interface réseau (3) notifiant l'au moins un dispositif de passager (8) qu'une annonce est faite.

4. Aéronef (100) comprenant un système (10) selon l'une des revendications 1 à 3.

5. Procédé (M) de conversion parole-texte d'annonces aux passagers à bord d'un aéronef (100), le procédé (M) comprenant :
• la fourniture (M1), par une commande de gestion de cabine (1), d'un signal vocal relatif à une annonce aux passagers à bord de l'aéronef (100) ;
• la conversion (M2), par une unité de traitement (6) d'un serveur d'applications de cabine (2), du signal vocal en un message texte contenant du texte correspondant à des mots parlés du signal vocal, dans lequel l'unité de traitement (6) convertit le signal vocal localement sans accéder à des ressources informatiques en ligne ; et
• la fourniture (M3), par une interface réseau (3), du message texte à au moins un dispositif de passager (8) à bord de l'aéronef (100),
dans lequel l'unité de traitement (6) traduit le signal vocal d'une langue source vers une langue cible dans le cadre de la conversion, dans lequel l'interface réseau (3) fournit un message texte traduit de manière correspondante à l'au moins un dispositif de passager (8) à bord de l'aéronef (100), dans lequel l'unité de traitement (6) génère un signal vocal traduit de manière correspondante contenant des mots parlés correspondant au texte du message texte traduit, dans lequel l'interface réseau (3) fournit le signal vocal traduit à l'au moins un dispositif de passager (8) à bord de l'aéronef (100) ; dans lequel la commande de gestion de cabine (1) effectue :
• l'enregistrement d'une annonce audio en direct sous forme de signal vocal et son stockage dans une mémoire de données (7) ; et
• le stockage du signal vocal traduit dans la mémoire de données (7) ;
dans lequel la mémoire de données (7) est accessible par les passagers et configurée pour permettre aux passagers de réécouter les annonces audio via le dispositif de passager (8).

6. Procédé (M) selon la revendication 5, dans lequel l'unité de traitement (6) comprend un accélérateur d'IA, en particulier une unité de traitement de tenseurs, utilisant l'IA et/ou l'apprentissage automatique pour convertir le signal vocal.

7. Procédé (M) selon l'une des revendications 5 ou 6, dans lequel la commande de gestion de cabine (1) fournit un signal de notification à l'au moins un dispositif de passager (8) via l'interface réseau (3) notifiant l'au moins un dispositif de passager (8) qu'une annonce est faite.

8. Produit programme informatique comprenant du code de programme pour exécuter le procédé (M) selon l'une quelconque des revendications 5 à 7 lorsque le produit programme informatique est exécuté sur un dispositif informatique.

9. Support d'enregistrement lisible par ordinateur stockant un produit programme informatique selon la revendication 8.
